# EUROPÄISCHE PATENTSCHRIFT

(11) **EP 3 243 591 B1**
(45) Veröffentlichungstag und Bekanntmachung des Hinweises auf die Patenterteilung: **07.11.2018**
(21) Anmeldenummer: 16169121.7
(22) Anmeldetag: 11.05.2016
(51) Int. Cl.: B23D 47/02, B27B 5/06, B65G 51/03

(54) **WERKSTÜCKAUFLAGETISCH**
WORKPIECE SUPPORTING TABLE
TABLE PORTE-PIECES

(43) Veröffentlichungstag der Anmeldung: 15.11.2017
(73) Patentinhaber: Schelling Anlagenbau GmbH, 6858 Schwarzach (AT)
(72) Erfinder: Fitz, Lukas, 6971 Hard (AT)
(74) Vertreter: Fechner, Thomas

(56) Entgegenhaltungen:
- EP-A1- 2 716 393
- WO-A1-03/008309
- US-A- 4 648 779
- US-A- 4 702 664

## Beschreibung

Die vorliegende Erfindung betrifft einen Werkstückauflagetisch gemäß des Oberbegriffs des Patentanspruchs 1. Weiters betrifft die Erfindung auch eine Plattenbearbeitungsanlage mit einem solchen Werkstückauflagetisch und ein Verfahren zum Betrieb eines solchen Werkstückauflagetisches.
Luftkissen werden bei Werkstückauflagetischen dazu eingesetzt, auch relativ schwere und gegebenenfalls auch großflächige Werkstücke wie z.B. Plattenstapel oder dergleichen auf der Werkstückauflagefläche schonend und kraftsparend zu bewegen. Werkstückauflagetische, auf deren Werkstückauflagefläche ein Luftkissen ausgebildet werden kann, sind in zahlreichen Ausgestaltungsformen beim Stand der Technik bekannt. Die DE 10 2008 010 089 A1 offenbart z.B. einen Werkstückauflagetisch, bei dem die Luftaustrittsöffnungen in Form von Kugelventildüsen realisiert sind, welche selektiv geöffnet und geschlossen werden können. Die EP 2 716 393 A1 offenbart verschiebbare Werkstückauflagetische mit Luftkissen, welche jeweils über einen Druckluftentnahmestutzen verfahrbar in einen Druckluftkanal eingreifen. Die Zuleitung zu diesem Druckluftkanal kann in der EP 2 716 393 A1 mittels Steuerklappen geöffnet und geschlossen werden.
In der WO 03/008309 A1 ist bereits gezeigt, dass der Luftzuführraum des Werkstückauflagetisches in mehrere Segmente unterteilt ist, wobei selektiv Druckluft durch die Segmente hindurch jeweils einer Gruppe der Luftaustrittsöffnungen zuführbar ist. In der WO 03/008309 A1 ist ein Ausführungsbeispiel gezeigt, bei dem zur selektiven Versorgung mit Druckluft jedem Segment eine eigene Druckluftquelle in Form eines Kompressors oder Gebläses zugeordnet ist. Durch selektives An- und Abschalten dieser Gebläse bzw. Kompressoren werden die Segmente einzeln oder gemeinsam mit Druckluft versorgt. Die US 4,648,779 A zeigt einen gattungsgemäßen Werkstückauflagetisch gemäß dem Oberbegriff des Patentanspruchs 1, in dessen Luftverteilerkanal von Hand betätigbare Ventile angeordnet sind.

Aufgabe der Erfindung ist es, einen alternativen Werkstückauflagetisch zu schaffen, bei dem die Segmente und damit einzelne Luftaustrittsöffnungen oder Gruppen von Luftaustrittsöffnungen selektiv mit Druckluft beaufschlagt werden können.
Dies wird durch einen Werkstückauflagetisch gemäß Patentanspruch 1 erreicht.
Es ist somit vorgesehen, dass der Werkstückauflagetisch zusätzlich zumindest einen Luftverteilerkanal mit zumindest einem Lufteinspeisungsbereich aufweist, wobei der Lufteinspeisungsbereich mit zumindest einer Druckluftquelle verbunden oder verbindbar ist. Dabei münden mehrere der Segmente jeweils mit ihren Luftzuführöffnungen in den Luftverteilerkanal. Weiters ist im Luftverteilerkanal zumindest ein Trennkörper verschiebbar angeordnet. Dieser Trennkörper unterteilt den Luftverteilerkanal in zumindest zwei Teilvolumina. In Abhängigkeit der jeweiligen Stellung des Trennkörpers im Luftverteilerkanal sind dann jeweils die Segmente mit Luftdruck der Luftdruckquelle beaufschlagt oder beaufschlagbar, deren Luftzuführöffnung in dasjenige Teilvolumen münden, in dem sich der Lufteinspeisungsbereich befindet.
Bevorzugt ist hierbei vorgesehen, dass nicht alle sondern eben nur die Segmente mit Druckluft der Druckquelle beaufschlagt oder beaufschlagbar sind, deren Luftzuführöffnungen in dasjenige Teilvolumen münden, in dem sich der Lufteinspeisungsbereich befindet. Durch ein entsprechendes Verlagern des verschiebbar im Luftverteilerkanal angeordneten Trennkörpers kann ausgewählt werden, welche Segmente über ihre Luftzuführöffnungen mit Druckluft versorgt werden. Nur auf den Luftaustrittsöffnungen der Werkstückauflagefläche, welche diesen Segmenten zugeordnet sind, bildet sich ein Luftkissen aus. Dies ermöglicht es, selektiv auf gewissen Bereichen der Werkstückauflagefläche ein Luftkissen auszubilden, während in anderen Bereichen der Werkstückauflagefläche kein Luftkissen ausgebildet ist. Hierdurch kann die Werkstückauflagefläche sehr flexibel in solche Bereiche untergliedert werden, in denen im Moment ein Luftkissen zum Transport sich dort befindlicher Werkstücke bereitgestellt wird, und in solche Bereiche, bei denen sich im Moment kein Luftkissen befindet, um so Werkstücke in diesen Bereichen zumindest zwischenzeitlich lagern zu können. Durch Verschieben des Trennkörpers im Luftverteilerkanal können somit Segmente der Druckluftversorgung zu- oder von dieser weggeschaltet werden, um so die Werkstückauflagefläche je nach Bedarf in Bereiche mit und ohne Luftkissen zu segmentieren.

In diesem Zusammenhang ist darauf hinzuweisen, dass die Werkstückauflagefläche vollständig eben ausgebildet sein kann, aber nicht muss. Es können, z.B. wie in der WO 03/008309 A1 gezeigt, auch bei erfindungsgemäßen Werkstückauflagetischen vertiefte und erhabene Bereiche vorhanden sein, z.B. um in den vertieften Bereichen Greifer von Vorschubeinrichtungen oder dergleichen verfahren zu können.

Wenn bisher und im Folgenden von Luft die Rede ist, so bezieht sich dies auf die übliche Verwendung von Druckluft, also unter Druck gesetzter normaler Umgebungsluft zur Ausbildung eines Luftkissens. Dies ist auch bei der Erfindung bevorzugt vorgesehen, da diese Gasmischung praktisch überall und kostenlos zur Verfügung steht. Hierdurch ist aber nicht ausgeschlossen, dass z.B. für Spezialanwendungen spezielle andere Gase oder Gaszusammensetzungen verwendet werden, um erfindungsgemäße Werkstückauflagetische auszubilden bzw. zu betreiben. In diesem Sinne ist der Begriff Luft also stellvertretend für beliebige Gase oder Gaszusammensetzungen zu verstehen. Es kann also grundsätzlich auch jedes andere geeignete Gas oder jede andere geeignete Gaszusammensetzung verwendet werden, um ein entsprechendes Gaskissen erfindungsgemäß im Sinne eines sogenannten Luftkissens auszubilden. Unter dem Begriff mehrere ist grundsätzlich eine Anzahl von zwei oder mehr zu verstehen. Unter einer selektiven Zufuhr von Druckluft durch die Segmente hindurch zu jeweils einer der Luftaustrittsöffnungen oder einer Gruppe der Luftaustrittsöffnungen ist zu verstehen, dass eine einzelne oder eben eine Gruppe der Luftaustrittsöffnungen der Werkstückauflagefläche einem Segment so zugeordnet ist, dass diese Luftaustrittsöffnung bzw. diese Gruppe von Luftaustrittsöffnungen nur durch dieses Segment des Luftzuführraumes hindurch mit Druckluft versorgt werden kann. Wird also Druckluft über den Luftverteilerkanal und die jeweilige Luftzuführöffnung in dieses Segment eingespeist, so kann die Druckluft aus der diesem Segment zugeordneten Luftaustrittsöffnung oder der diesem Segment zugeordneten Gruppe von Luftaustrittsöffnungen austreten, um dort ein Luftkissen auszubilden. Durch die Segmentierung des Luftzuführraumes sind somit einzelne Luftaustrittsöffnungen oder Gruppen von Luftaustrittsöffnungen selektiv ansteuer- bzw. mit Druckluft versorgbar, während andere Luftaustrittsöffnungen in anderen Bereichen der Werkstückauflagefläche eben zu diesem Zeitpunkt nicht mit Druckluft versorgt werden. Ist die Druckluftquelle in Betrieb, so werden je nach Stellung des Trennkörpers im Luftverteilerkanal die entsprechenden Segmente mit Druckluft beaufschlagt. Ist die Druckluftquelle nicht in Betrieb, so sind die entsprechenden Segmente bei der entsprechenden Stellung des Trennkörpers im Luftverteilerkanal zumindest mit Druckluft beaufschlagbar, sobald die Druckluftquelle aktiviert wird.

Bei der Erfindung ist vorgesehen, dass der Trennkörper im Luftverteilerkanal verschiebbar gelagert ist. Besonders bevorzugt ist dabei eine lineare Verschiebbarkeit des Trennkörpers im Luftverteilerkanal vorgesehen. Der Trennkörper kann somit z.B. als Kolben ausgebildet sein. Bevorzugt ist er gegen die Wandungen des Luftverteilerkanals abgedichtet. Allgemeiner gesprochen ist günstigerweise vorgesehen, dass der Trennkörper die Teilvolumina im Luftverteilerkanal abdichtend voneinander trennt. Dies bedeutet also, dass bei bevorzugten Ausgestaltungsformen der Erfindung kein Gasaustausch bzw. Luftaustausch durch den Trennkörper hindurch oder am Trennkörper vorbei stattfinden kann.

Der Trennkörper ist in bevorzugten Ausgestaltungsformen der Erfindung unabhängig vom jeweils in den Teilvolumina anliegenden Drücken im Luftverteilerkanal bewegbar und auch an den jeweils erreichten Stellen festhaltbar. In diesem Zusammenhang sehen bevorzugte Varianten der Erfindung vor, dass der Werkstückauflagetisch einen Trennkörperantrieb aufweist, mit dem der Trennkörper unabhängig von einer Druckbeaufschlagung zumindest eines der Teilvolumina entlang des Luftverteilerkanals bewegbar und/oder an der jeweiligen Position festhaltbar ist. Dies ist so zu verstehen, dass es sich um einen separaten Trennkörperantrieb handelt, der Trennkörper also nicht zwangsweise aufgrund der Druckverhältnisse in den beiden Teilvolumina bewegt wird, sondern mittels des Trennkörperantriebs gezielt auf eine bestimmte, jeweils benötigte Position gefahren werden kann, unabhängig davon, welche Druckverhältnisse gerade in den Teilvolumina vorliegen. Es kann in diesem Zusammenhang auch vorgesehen sein, dass der Trennkörper mittels des Trennkörperantriebs auch gegen einen auf ihn wirkenden Differenzdruck zwischen den Teilvolumina bewegbar ist. Natürlich kann der Trennkörperantrieb auch dazu verwendet werden, den Trennkörper dann zu bewegen, wenn kein Differenzdruck zwischen den Teilvolumina herrscht. Für den Trennkörperantrieb gibt es grundsätzlich verschiedenste Möglichkeiten. Es könnte sich z.B. um eine hydraulisch oder pneumatisch angetriebene Kolben-Zylinder-Einheit handeln, bei der der Trennkörper an einer Kolbenstange befestigt und von der Kolben-Zylinder-Einheit im Luftverteilerkanal bewegt wird. Es ist auch denkbar, den Trennkörper z.B. magnetisch mit einem außerhalb des Luftverteilerkanals angeordneten Antrieb zu koppeln, um den Trennkörper so im Luftverteilerkanal bewegen und/oder an einer gewünschten Position festhalten zu können.

Besonders bevorzugte Varianten der Erfindung sehen in diesem Zusammenhang aber vor, dass der Trennkörperantrieb zumindest ein mit dem Trennkörper verbundenes Zugseil und zumindest ein Motor zum Ziehen am Zugseil aufweist. Grundsätzlich kann dabei für jede Zugrichtung ein Zugseil und ein Motor vorgesehen sein. Besonders bevorzugte Varianten sehen aber vor, dass das Zugseil umlaufend geführt ist. Verallgemeinert gesprochen, ist günstigerweise vorgesehen, dass der Trennkörper mittels des Trennkörperantriebs in einander gegenüberliegenden Bewegungsrichtungen im Luftverteilerkanal bewegt werden kann. Dies kann natürlich nicht nur mit Zugseillösungen sondern z.B. auch mit den oben genannten anderen Lösungen erreicht werden.

In einfachen Varianten der Erfindung ist vorgesehen, dass jeder Luftverteilerkanal über genau einen Lufteinspeisungsbereich von genau einer Druckluftquelle beaufschlagt wird. Dieser Lufteinspeisungsbereich liegt dann in der Regel entweder auf der einen oder auf der anderen Seite des Trennkörpers. In anderen Worten ist in diesen einfachen Varianten vorgesehen, dass der Lufteinspeisungsbereich entweder im einen oder im anderen der Teilvolumina angeordnet ist. Es sind aber auch Ausführungsvarianten der Erfindung denkbar, bei denen zwei oder mehr Lufteinspeisungsbereiche für einen Luftverteilerkanal vorgesehen sind. Besonders bevorzugt sind bei zwei Lufteinspeisungsbereichen diese jeweils an einander gegenüberliegenden Enden des Luftverteilerkanals situiert. In diesem Zusammenhang kann vorgesehen sein, dass im Falle von zwei oder mehr Lufteinspeisungsbereichen über einen der Lufteinspeisungsbereiche jeweils nur die Segmente mit Druckluft der Druckluftquelle beaufschlagt oder beaufschlagbar sind, deren Luftzuführöffnungen in dasjenige Teilvolumen münden, in dem sich dieser Lufteinspeisungsbereich befindet.

Die Luftzuführöffnungen der Segmente sind bevorzugt, in zumindest einer der Bewegungsrichtungen des Trennkörpers im Luftverteilerkanal gesehen, in einer Abfolge hintereinander angeordnet.

Die Segmente könnten grundsätzlich auch als Luftkammern bezeichnet werden. Es bestehen verschiedene Möglichkeiten den Luftzuführraum des Werkstückauflagetisches zu segmentieren. Allgemein gesprochen kann z.B. vorgesehen sein, dass der Luftzuführraum mittels Trennelementen in die Segmente unterteilt ist. Bei den Segmenten handelt es sich dann sozusagen um Luftkammern, welche mittels der Trennelemente voneinander getrennt sind. Besonders bevorzugt sind die Segmente jeweils abgesehen von ihren Luftzuführöffnungen und den ihnen zugeordneten Luftaustrittsöffnungen vollständig abgedichtet ausgebildet. Die Trennelemente können als Trennwände ausgeführt sein. Der Luftzuführraum kann aber auch vollständig oder teilweise in Form eines Schlauchsystems ausgebildet sein. In diesen Fällen sind dann die Segmente als Schläuche ausgebildet, welche wiederum eine Luftzuführöffnung und eine entsprechende Anzahl von Luftaustrittsöffnungen aufweisen. Man könnte dabei die Außenwände der Schläuche auch als Trennwände bzw. Trennelemente ansehen, womit auch diese Variante allgemein unter die oben genannte Variante mit den Trennelementen fallen kann.
Auch wenn dies nicht zwingend so sein muss, so sehen doch bevorzugte Ausgestaltungsformen erfindungsgemäßer Werkstückauflagetische vor, dass die Werkstückauflagefläche eine in sich zusammenhängende starre Oberfläche ist. Bevorzugt ist auch vorgesehen, dass die Segmente permanent ortsfest im Werkstückauflagetisch angeordnet sind. In anderen Worten sehen diese bevorzugten Varianten also vor, dass die Segmente unverschiebbar und auch nicht sonstwie verlagerbar als starre Elemente des Werkstückauflagetisches ausgebildet sind.
In gewissen Ausführungsformen der Erfindung kann es ausreichen, dass alle Segmente des Werkstückauflagetisches über nur einen einzigen Luftverteilerkanal mit Druckluft beaufschlagt werden. Um die Werkstückauflagefläche bzw. die darauf auszubildenden Luftkissen aber noch feiner unterteilen zu können, kann auch vorgesehen sein, dass der Werkstückauflagetisch zwei oder mehr Luftverteilerkanäle mit jeweils darin bewegbar angeordneten Trennkörpern aufweist, wobei einzelne Segmente oder Gruppen von Segmenten jeweils nur über jeweils einen der Luftverteilerkanäle mit Druckluft beaufschlagbar sind.
Grundsätzlich ist es auch denkbar, dass mehr als ein Trennkörper verschiebbar in dem oder einem der Luftverteilerkanäle angeordnet ist.

Ein Verfahren zum Betrieb eines erfindungsgemäßen Werkstückauflagetisches sieht vor, dass Druckluft von der Druckluftquelle erzeugt und über den Lufteinspeisungsbereich in den Luftverteilerkanal eingespeist wird und, vorzugsweise nur, diejenigen Segmente vom Luftverteilerkanal aus mit Druckluft beaufschlagt werden, deren Luftzuführöffnungen in dasjenige Teilvolumen münden, in dem sich dieser Lufteinspeisungsbereich befindet. Welche Segmente mit Druckluft beaufschlagt werden, kann dabei durch Bewegen bzw. Verschieben des Trennkörpers im Luftverteilerkanal eingestellt werden.

Wie eingangs bereits dargelegt, betrifft die Erfindung nicht nur einen Werkstückauflagetisch und ein Verfahren zu dessen Betrieb sondern auch eine Plattenbearbeitungsanlage mit einem erfindungsgemäßen Werkstückauflagetisch. Grundsätzlich kann es sich dabei um unterschiedlichste Plattenbearbeitungsanlagen handeln. Diese können Werkzeuge bzw. Maschinen zum Sägen bzw. Aufteilen und/oder Fräsen und/oder Bohren und/oder für anderweitige Bearbeitungsschritte mit umfassen. Werkstückauflagetische gemäß der Erfindung können dabei zum Zuführen aber auch zum Abführen der zu bearbeitenden Werkstücke, insbesondere Plattenstapel, und eben aber auch zu deren Zwischenlagerung verwendet werden. Besonders bevorzugte Varianten erfindungsgemäßer Plattenbearbeitungsanlagen sehen vor, dass die Plattenbearbeitungsanlage zumindest eine Säge aufweist. Diese Säge ist bevorzugt entlang einer Sägelinie verfahrbar. Die Sägelinie kann, wie an sich bekannt, linear bzw. gerade ausgeführt sein. Bei der Säge kann es sich z.B. um eine Unter- oder Überflurtischkreissäge handeln. Sie kann in einem Sägewagen entlang der Sägelinie verfahrbar sowie anhebbar und absenkbar sein. All dies ist an sich beim Stand der Technik bekannt und kann mit erfindungsgemäßen Werkstückauflagetischen kombiniert werden, um so erfindungsgemäße Plattenbearbeitungsanlagen herzustellen. Besonders bevorzugt ist dabei vorgesehen, dass die Plattenbearbeitungsanlage zumindest eine, entlang einer Sägelinie verfahrbare, Säge aufweist und der Luftverteilerkanal in einer Richtung weg von der, vorzugsweise orthogonal zur, Sägelinie längserstreckt angeordnet ist. Günstige Varianten sehen vor, dass die Plattenbearbeitungsanlage zumindest eine, entlang einer Sägelinie verfahrbare, Säge aufweist und die Segmente in einer Abfolge hintereinander in einer Richtung weg von der, vorzugsweise orthogonal zur, Sägelinie angeordnet sind.

Weitere Merkmale und Einzelheiten bevorzugter Varianten der Erfindung werden beispielhaft anhand von schematisiert dargestellten Ausgestaltungsformen der Erfindung nachfolgend erläutert. Es zeigen:
Fig. 1 einen Längsschnitt durch eine erste Ausführungsvariante einer Plattenbearbeitungsanlage mit einem erfindungsgemäßen Werkstückauflagetisch;
Fig. 2 eine stark schematisierte Draufsicht auf dieses Ausführungsbeispiel und
Fig. 3 eine zweite Variante eines erfindungsgemäß ausgebildeten Werkstückauflagetisches als Teil einer Plattenbearbeitungsanlage.

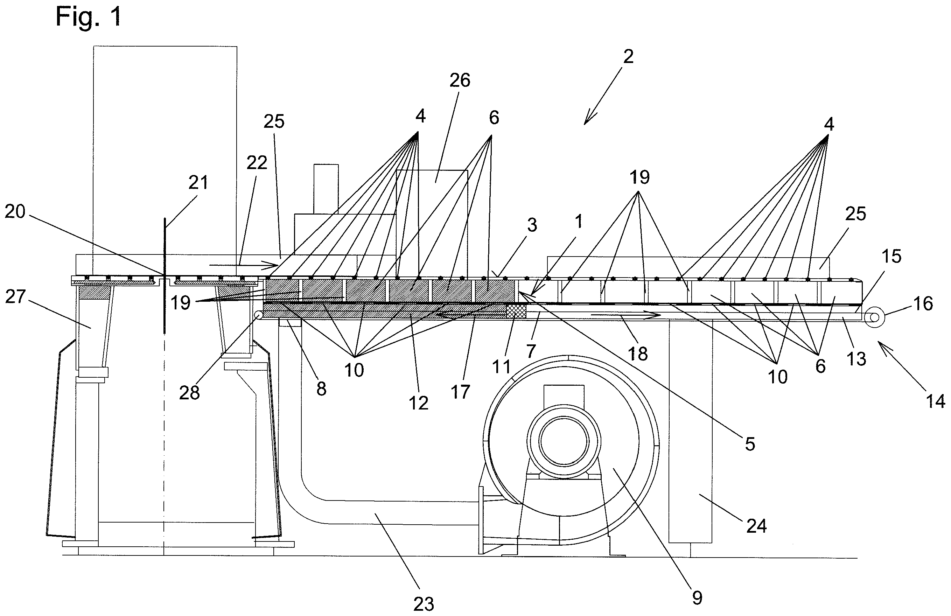

In dem schematisierten Längsschnitt gemäß Fig. 1 durch das erste erfindungsgemäße Ausführungsbeispiel einer Plattenbearbeitungsanlage 2 mit einem Werkstückauflagetisch 1 ist der Werkstückauflagetisch 1 angrenzend an einen Sägetisch 27 der Plattenbearbeitungsanlage 2 angeordnet. Der Sägetisch 27 kann in an sich bekannter Art und Weise ausgeführt sein und ist hier nur stark schematisiert dargestellt. Er kann an sich bekannte Druckbalken und dergleichen aufweisen, was hier nicht im Detail gezeigt ist. Zu sehen ist hier jedenfalls die z.B. in Form eines Kreissägeblattes ausgebildete Säge 21, welche entlang der Sägelinie 20 verfahrbar ist, um so die Werkstücke 25 zu zersägen. Bei den Werkstücken 25 kann es sich um z.B. Platten, Plattenstapel aber auch um andere Werkstücke handeln. Für den Transport der Werkstücke 25 hin zur Sägelinie 20 ist eine hier nur stark schematisiert dargestellte Vorschubeinrichtung 26 vorgesehen, welche, wie an sich bekannt, mittels Greifern oder dergleichen die Werkstücke 25 zur Sägelinie 20 hin, von dieser weg und gegebenenfalls auch über die Sägelinie hinweg transportieren, vorzugsweise verschieben, kann.

Der Werkstückauflagetisch 1 dieses Ausführungsbeispiels lagert zum einen auf dem Standfuß 24 und zum anderen ist er tragend mit dem Sägetisch 27 verbunden. Dies kann natürlich auch in beliebiger anderer Form ausgeführt sein. Der Werkstückauflagetisch 1 weist an seiner Werkstückauflagefläche 3, auf die die Werkstücke 25 aufgelegt werden, eine Vielzahl von Luftaustrittsöffnungen 4 auf, um so auf der Werkstückauflagefläche 3 entsprechende Luftkissen ausbilden zu können. Die Druckluftzufuhr zu den Luftaustrittsöffnungen 4 erfolgt grundsätzlich über den Luftzuführraum 5 des Werkstückauflagetisches 1. Der Luftzuführraum 5 ist in diesem Ausführungsbeispiel mittels der hier als Wände ausgeführten Trennelemente 19 in die Segmente 6 unterteilt. Jedem Segment 6 ist eine Gruppe von Luftaustrittsöffnungen 4 zugeordnet. Die Luftaustrittsöffnungen 4 der jeweiligen Gruppe können ausschließlich durch das jeweils ihnen zugeordnete bzw. hier unter ihnen angeordnete Segment 6 des Luftzuführraums 5 mit Druckluft versorgt werden. Durch die Segmente 6 hindurch ist also jeweils einer der Luftaustrittsöffnungen 4 bzw. hier einer Gruppe der Luftaustrittsöffnungen 4 selektiv Druckluft zuführbar. Um die einzelnen Segmente 6 mit Druckluft versorgen zu können, weist jedes Segment 6 eine eigene Luftzuführöffnung 10 auf. Diese Luftzuführöffnung 10 mündet jeweils in einen Luftverteilerkanal 7. In diesem Ausführungsbeispiel ist im Luftverteilerkanal 7 ein Trennkörper 11 angeordnet, welcher in die Bewegungsrichtungen 17 und 18 verschiebbar gelagert ist.

Der Trennkörper 11 teilt somit den Luftverteilerkanal 7 in die beiden Teilvolumina 12 und 13. In der gezeigten Darstellung befindet sich das Teilvolumen 12 links und das Teilvolumen 13 rechts vom Trennkörper 11. Wie eingangs bereits erläutert, ist der Trennkörper 11 z.B. als Kolben günstigerweise so ausgeführt, dass er die Teilvolumina 12 und 13 abdichtend voneinander trennt. Im gezeigten Ausführungsbeispiel gemäß Fig. 1 wird die Druckluft von einer Druckluftquelle 9 in Form eines Gebläses erzeugt und über eine Druckluftleitung 23 und den Lufteinspeisungsbereich 8 dem Luftverteilerkanal 7 zugeführt. Bei der Druckluftleitung 23 kann es sich z.B. im Sinne einer Schwingungsentkopplung um einen Schlauch handeln. Es sind aber auch andere Leitungen denkbar. Eine entsprechende Druckluftquelle 9 könnte aber natürlich auch direkt, also ohne Zwischenschaltung einer Druckluftleitung 23 am Lufteinspeisungsbereich 8 des Luftverteilerkanals 7 angeordnet sein. Egal, wie dies nun konkret ausgeführt ist, so ist jedenfalls vorgesehen, dass die von der Druckluftquelle 9 erzeugte Druckluft über den Lufteinspeisungsbereich 8 in das Teilvolumen 12 eingespeist wird, sodass sie über die Luftzuführöffnungen 10, welche im Teilvolumen 12, also hier links vom Trennkörper 11, in den Luftverteilerkanal 7 münden, in die diesen Luftzuführöffnungen 10 zugeordneten Segmente 6 einströmen kann. Hierdurch kann diese so in diese Segmente 6 eingebrachte Druckluft über die diesen Segmenten 6 zugeordneten Luftaustrittsöffnungen 4 austreten, um über diesen Segmenten 6 ein Luftkissen auszubilden. Über die jeweilige Stellung des Trennkörpers 11 im Luftverteilerkanal 7 kann somit gesteuert werden, welche der Segmente 6 mit Druckluft beaufschlagt werden und welche nicht. Es ist jedenfalls so, dass nur die Segmente 6 mit Druckluft der Druckluftquelle 9 beaufschlagt werden bzw. beaufschlagbar sind, deren jeweilige Luftzuführöffnung 10 in das Teilvolumen mit dem Lufteinspeisungsbereich 8, hier also in das Teilvolumen 12, münden. Die Segmente 6 deren Luftzuführöffnungen 10 in das Teilvolumen 13 des Luftverteilerkanals 7 münden, werden in diesem Ausführungsbeispiel nicht mit Druckluft beaufschlagt, sodass über diesen Segmenten 6 auch kein Luftkissen ausgebildet wird. Dies kann dazu genutzt werden, auf dem durch diese Segmente 6 vorgegebenen Bereich der Werkstückauflagefläche 3 Werkstücke 25 zu lagern bzw. zwischenzulagern. Durch Verschieben des Trennkörpers 11 entlang des Luftverteilerkanals 7 in einer der Bewegungsrichtungen 17 oder 18 kann somit eingestellt werden, über welchen Segmenten 6 ein Luftkissen ausgebildet wird und über welchen Segmenten 6 kein Luftkissen ausgebildet wird. Die Teilvolumina 12 und 13 werden durch Verschieben des Trennkörpers 11 in einer der Bewegungsrichtungen 17 und 18 in ihrer Größe verändert.

Wie eingangs bereits erläutert, ist günstigerweise ein Trennkörperantrieb 14 vorgesehen, mit dem der Trennkörper 11 unabhängig von der jeweiligen Druckbeaufschlagung der Teilvolumina 12 und/oder 13 entlang des Luftverteilerkanals 7 bewegbar, hier verschiebbar ist. Mit diesem Trennkörperantrieb 14 kann in bevorzugten Ausgestaltungen, wie der hier gezeigten, der Trennkörper 11 auch gegen die jeweiligen Druckverhältnisse in den Teilvolumina 12 und 13 und dem daraus resultierenden Differenzdruck in der jeweiligen Position festgehalten werden.

Im hier konkret gezeigten Ausführungsbeispiel weist der Trennkörperantrieb 14 einen Motor 16 und ein Zugseil 15 auf. Das Zugseil ist umlaufend über den Motor 16 und die gegenüberliegend angeordnete Umlenkrolle 28 geführt, sodass durch Zug in die entsprechende Richtung der Trennkörper 11 in diesem Ausführungsbeispiel vom Trennkörperantrieb 14 sowohl in Bewegungsrichtung 17 als auch in die dazu entgegengesetzte Bewegungsrichtung 18 bewegt werden kann. Die Durchführung zum Ein- und Ausführen des Zugseils 15 in und aus dem Luftverteilerkanal 7 ist in geeigneter, an sich bekannter Art und Weise abgedichtet. Anstelle eines Zugseils 15 kann natürlich auch ein Zugband, ein Zuggurt, eine Kette oder dergleichen verwendet werden. All dies ist vom Begriff des Zugseils 15 mit umfasst.

Alternativ könnte natürlich auch vorgesehen sein, dass an beiden einander gegenüberliegenden Enden des Luftverteilerkanals 7 jeweils ein Motor 16 mit jeweils einem Zugseil 15 angeordnet ist, um so mit dem einen Motor 16 den Trennkörper 11 in die eine Bewegungsrichtung 17 und mit dem anderen Motor 16 in die andere Bewegungsrichtung 18 ziehen zu können. Durch die hier dargestellte Variante wird aber ein Motor 16 eingespart.

Eingangs wurde bereits erläutert, dass anstelle des hier konkret realisierten Trennkörperantriebs 14 natürlich auch pneumatische oder hydraulische Kolben-Zylinder-Einheiten verwendet werden können, an deren Kolbenstange der Trennkörper 11 befestigt ist, um ihn in die Bewegungsrichtung 17 und/oder 18 zu bewegen. Eine weitere Möglichkeit wäre ein Antrieb mittels einer Gewindespindel. Genauso gut könnte der Trennkörper 11 auch magnetisch oder dergleichen an einen geeigneten Antrieb außerhalb des Luftverteilerkanals 7 gekoppelt sein. Hierzu gibt es verschiedenste Möglichkeiten.

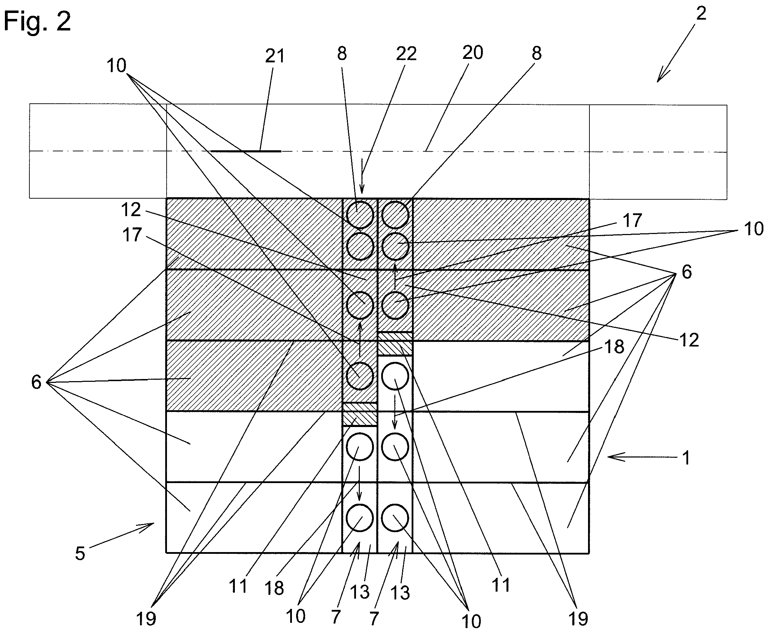

Fig. 2 zeigt eine schematisierte Draufsicht auf den Werkstückauflagetisch 1 bzw. die Werkstückauflagefläche 3 des Werkstückauflagetisches 1 gemäß Fig. 1. Hier ist zunächst gut zu erkennen, dass in diesem Ausführungsbeispiel die Luftzuführöffnung 10 der Segmente 6 und auch die Segmente 6 selbst in einer der Bewegungsrichtungen 17 und 18 des Trennkörpers 11 im Luftverteilerkanal gesehen in einer Abfolge hintereinander angeordnet sind. Die Segmente 6 sind somit in einer Abfolge hintereinander in einer Richtung 22 weg von der, vorzugsweise orthogonal zur, Sägelinie 20 angeordnet. Weiters ist zu erkennen, dass in diesem Ausführungsbeispiel nicht alle Segmente 6 über einen einzigen Luftverteilerkanal 7 angesteuert werden müssen. In der gezeigten Ausführungsvariante sind beispielhaft zwei Luftverteilerkanäle 7 vorgesehen, in denen jeweils ein Trennkörper 11 verschiebbar gelagert ist. Die eine Hälfte der Segmente 6 wird durch den einen Luftverteilerkanal 7 und die andere Hälfte der Segmente 6 wird durch den anderen Luftverteilerkanal 7 mit Druckluft gespeist. Welche der jeweiligen Segmente über den jeweiligen Luftverteilerkanal 7 im Moment gespeist werden, hängt von der momentanen Position des Trennkörpers 11 im Luftverteilerkanal 7 ab. All diejenigen Segmente 6, deren Luftzuführöffnungen 10 sich im Teilvolumen 12 befinden, in dem sich der Lufteinspeisungsbereich 8 befindet, werden mit Druckluft beaufschlagt. Diejenigen Segmente 6, deren Luftzuführöffnungen 10 sich im Teilvolumen 13 befinden, werden nicht mit Druckluft versorgt. In Fig. 2 sind bei der jeweils dargestellten Stellung des Trennkörpers 11 jeweils die Segmente 6, welche schraffiert dargestellt sind, mit Druckluft beaufschlagt. Die in Fig. 2 nicht schraffiert gekennzeichneten Segmente 6 werden bei dieser Stellung der jeweiligen Trennkörper 11 nicht mit Druckluft beaufschlagt.

In der gezeigten Art und Weise ist es somit möglich, je nach Bedarf in unterschiedlichen Bereichen der Werkstückauflagefläche 3 ein Luftkissen bereitzustellen oder eben gerade nicht bereitzustellen. In den Bereichen, in denen gerade kein Luftkissen ausgebildet wird, können Werkstücke 25 zwischengelagert werden. In den mit Druckluft beaufschlagten Bereichen der Werkstückauflagefläche 3, in denen sich somit momentan ein Luftkissen befindet, können die Werkstücke 25 oberflächenschonend und kraftsparend verschoben, gedreht und/oder anderweitig bewegt werden. Durch eine entsprechende Anzahl von Segmenten 6 und Luftverteilerkanälen 7 kann eine nahezu beliebige Segmentierung der Werkstückauflagefläche 3 erreicht werden.

Im gezeigten Ausführungsbeispiel sind die Segmente 6 jedenfalls als Luftkammern ausgebildet, welche durch die wandartigen Trennelemente 19 voneinander getrennt sind. Wie eingangs bereits erläutert, könnte anstelle dieser kammerartigen Ausbildung der Segmente 6 aber auch eine schlauchsystemartige Ausgestaltung und Aufteilung des Luftzuführraums 5 realisiert werden. Dabei könnte z.B. jeweils ein entsprechender Schlauch ein jeweiliges Segment 6 bilden, wobei dann in dem Schlauch die Luftaustrittsöffnungen 4 und die Luftzuführöffnung 10 ausgebildet sein müssten.

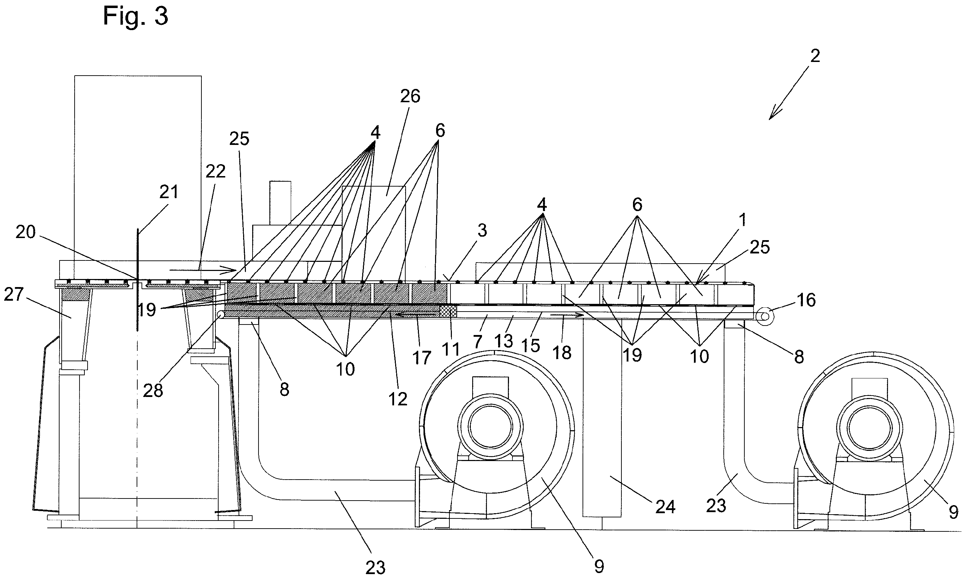

Fig. 3 zeigt nun noch ein zweites erfindungsgemäßes Ausführungsbeispiel, welches in weiten Teilen dem ersten Ausführungsbeispiel gleicht. Bezüglich der auch im ersten Ausführungsbeispiel realisierten Merkmale dieses zweiten Ausführungsbeispiels wird zur Vermeidung von Wiederholungen auf die obigen Ausführungen zum ersten Ausführungsbeispiel verwiesen. Im Folgenden wird nur noch auf die Unterschiede zum ersten Ausführungsbeispiel eingegangen.

Der wesentliche Unterschied besteht darin, dass in diesem zweiten Ausführungsbeispiel gemäß Fig. 3 nicht nur dem Teilvolumen 12 auf der einen Seite des Trennkörpers 11 sondern auch dem Teilvolumen 13 auf der gegenüberliegenden Seite des Trennkörpers 11 jeweils ein eigener Lufteinspeisungsbereich 8 zugeordnet ist. Im gezeigten Ausführungsbeispiel gemäß Fig. 3 werden beide Lufteinspeisungsbereiche 8 mittels eigener, hier wiederum als Gebläse ausgebildeter, Druckluftquellen 9 mit Druckluft versorgt. Natürlich könnte man auch nur eine einzige Druckluftquelle 9 verwenden, um über ein entsprechend schaltbares Klappensystem oder dergleichen beide Lufteinspeisungsbereiche 8 mit Druckluft versorgen zu können. Die Verschiebung des Trennkörpers 11 in den Bewegungsrichtungen 17 und 18 im Luftverteilerkanal 7 erfolgt in diesem zweiten Ausführungsbeispiel gemäß Fig. 3 in gleicher Art und Weise wie im ersten Ausführungsbeispiel. Auch hier bestimmt die Lage des Trennkörpers 11 somit, welche Segmente 6 mit ihren Luftzuführöffnungen 10 in das eine Teilvolumen 12 und welche in das andere Teilvolumen 13 münden. Wird das Teilvolumen 12 mittels der ihm zugeordneten Druckluftquelle 9 mit Druckluft beaufschlagt, so bildet sich ein Luftkissen oberhalb von denjenigen Segmenten 6 aus, welche mit ihren Luftzuführöffnungen 10 in das Teilvolumen 12 münden. Wird hingegen das Teilvolumen 13 von der ihm zugeordneten Druckluftquelle 9 mit Druckluft beaufschlagt, so bildet sich das Luftkissen oberhalb derjenigen Segmenten 6 aus, welche mit ihren Luftzuführöffnungen 10 in das Teilvolumen 13 münden. Durch Verschieben des Trennkörpers 11 kann die Größe der Teilvolumina 12 und 13 und damit auch die Zuordnung der Segmente 6 zu den beiden Teilvolumina 12 und 13 verändert werden, was im Resultat dazu führt, dass ein Luftkissen in unterschiedlichen Bereichen des Werkstücks auf der Werkstückauflagefläche 3 ausgebildet werden kann. Generell sei darauf hingewiesen, dass natürlich pro Luftverteilerkanal 7 nicht nur ein Trennkörper 11 sondern auch mehrere Trennkörper 11, vorzugsweise unabhängig voneinander bewegbar, in einem einzigen Luftverteilerkanal 7 angeordnet sein können, um so noch detaillierter die Bereiche in denen sich Luftkissen ausbilden, einstellen zu können.

Bei dem hier in Fig. 3 gezeigten Ausführungsbeispiel kann vorgesehen sein, dass entweder nur die eine oder nur die andere Druckluftquelle 9 zu einem gewissen Zeitpunkt oder für eine gewisse Zeitspanne Druckluft erzeugt. Es können aber auch beide Druckluftquellen 9 gleichzeitig arbeiten, wobei durch entsprechende Ansteuerung der Druckluftquellen 9 natürlich auch gleiche oder unterschiedliche Druckluftwerte in den Teilvolumina 12 und 13 einstellbar sind. Insgesamt kann somit sowohl die Stärke als auch die räumliche Abgrenzung der jeweiligen Luftkissen relativ frei eingestellt werden.

### Legende

### zu den Hinweisziffern:

- 1: Werkstückauflagetisch
- 2: Plattenbearbeitungsanlage
- 3: Werkstückauflagefläche
- 4: Luftaustrittsöffnung
- 5: Luftzuführraum
- 6: Segment
- 7: Luftverteilerkanal
- 8: Lufteinspeisungsbereich
- 9: Druckluftquelle
- 10: Lufteinfuhröffnung
- 11: Trennkörper
- 12: Teilvolumen
- 13: Teilvolumen
- 14: Trennkörperantrieb
- 15: Zugseil
- 16: Motor
- 17: Bewegungsrichtung
- 18: Bewegungsrichtung
- 19: Trennelement
- 20: Sägelinie
- 21: Säge
- 22: Richtung
- 23: Druckluftleitung
- 24: Standfuß
- 25: Werkstück
- 26: Vorschubvorrichtung
- 27: Sägetisch
- 28: Umlenkrolle

## Patentansprüche

1. Werkstückauflagetisch (1), insbesondere für eine Plattenbearbeitungsanlage (2), wobei der Werkstückauflagetisch (1) zumindest eine Werkstückauflagefläche (3), in der zur Ausbildung zumindest eines Luftkissens eine Vielzahl von Luftaustrittsöffnungen (4) angeordnet ist, und zumindest einen Luftzuführraum (5) zur Zuführung von Luft zu den Luftaustrittsöffnungen (4) aufweist, wobei der Luftzuführraum (5) in mehrere Segmente (6) unterteilt ist, wobei durch die Segmente (6) hindurch jeweils einer der Luftaustrittsöffnungen (4) oder einer Gruppe der Luftaustrittsöffnungen (4) selektiv Druckluft zuführbar ist, wobei der Werkstückauflagetisch (1) zusätzlich zumindest einen Luftverteilerkanal (7) mit zumindest einem Lufteinspeisungsbereich (8), welcher mit zumindest einer Druckluftquelle (9) verbunden oder verbindbar ist, aufweist, wobei mehrere der Segmente (6) jeweils mit ihren Luftzuführöffnungen (10) in den Luftverteilerkanal (7) münden, **dadurch gekennzeichnet, dass** zumindest ein im Luftverteilerkanal (7) bewegbar angeordneter Trennkörper (11) den Luftverteilerkanal (7) in zumindest zwei Teilvolumina (12, 13) unterteilt, wobei in Abhängigkeit der jeweiligen Stellung des Trennkörpers (11) im Luftverteilerkanal (7) jeweils, vorzugsweise nur, die Segmente (6) mit Druckluft der Druckluftquelle (9) beaufschlagt oder beaufschlagbar sind, deren Luftzuführöffnungen (10) in dasjenige Teilvolumen (12, 13) münden, in dem sich der Lufteinspeisungsbereich (8) befindet und der Trennkörper (11) im Luftverteilerkanal (7), vorzugsweise linear, verschiebbar gelagert ist.

2. Werkstückauflagetisch (1) nach Anspruch 1, **dadurch gekennzeichnet, dass** der Trennkörper (11) die Teilvolumina (12, 13) abdichtend voneinander trennt.

3. Werkstückauflagetisch (1) nach Anspruch 1 oder 2, **dadurch gekennzeichnet, dass** er einen Trennkörperantrieb (14) aufweist, mit dem der Trennkörper (11) unabhängig von einer Druckbeaufschlagung zumindest eines der Teilvolumina (12, 13) entlang des Luftverteilerkanals (7) bewegbar und/oder an der jeweiligen Position festhaltbar ist.

4. Werkstückauflagetisch (1) nach Anspruch 3, **dadurch gekennzeichnet, dass** der Trennkörperantrieb (14) zumindest ein mit dem Trennkörper (11) verbundenes, vorzugsweise umlaufend geführtes, Zugseil (15) und zumindest einen Motor (16) zum Ziehen am Zugseil (15) aufweist.

5. Werkstückauflagetisch (1) nach Anspruch 3 oder 4, **dadurch gekennzeichnet, dass** der Trennkörper (11) mittels des Trennkörperantriebs (14) in einander gegenüberliegende Bewegungsrichtungen (17, 18) im Luftverteilerkanal (7) bewegt werden kann.

6. Werkstückauflagetisch (1) nach einem der Ansprüche 1 bis 5, **dadurch gekennzeichnet, dass** im Falle von zwei oder mehr Lufteinspeisungsbereichen (8) über einen der Lufteinspeisungsbereiche (8) jeweils nur die Segmente (6) mit Druckluft der Druckluftquelle (9) beaufschlagt oder beaufschlagbar sind, deren Luftzuführöffnungen (4) in dasjenige Teilvolumen (12, 13) münden, in dem sich dieser Lufteinspeisungsbereich (8) befindet.

7. Werkstückauflagetisch (1) nach einem der Ansprüche 1 bis 6, **dadurch gekennzeichnet, dass** die Luftzuführöffnungen (10) der Segmente (6), in zumindest einer der Bewegungsrichtungen (17, 18) des Trennkörpers (11) im Luftverteilerkanal (7) gesehen, in einer Abfolge hintereinander angeordnet sind.

8. Werkstückauflagetisch (1) nach einem der Ansprüche 1 bis 7, **dadurch gekennzeichnet, dass** der Luftzuführraum (5) mittels Trennelementen (19), vorzugsweise Trennwänden, in die Segmente (6) unterteilt ist und/oder die Segmente (6) als Schläuche ausgebildet sind.

9. Werkstückauflagetisch (1) nach einem der Ansprüche 1 bis 8, **dadurch gekennzeichnet, dass** die Werkstückauflagefläche (3) eine in sich zusammenhängende starre Oberfläche ist und/oder die Segmente (6) permanent ortsfest im Werkstückauflagetisch (1) angeordnet sind.

10. Werkstückauflagetisch (1) nach einem der Ansprüche 1 bis 9, **dadurch gekennzeichnet, dass** der Werkstückauflagetisch (1) zwei oder mehr Luftverteilerkanäle (7) mit jeweils darin bewegbar angeordneten Trennkörpern (11) aufweist, wobei einzelne Segmente (6) oder Gruppen von Segmenten (6) jeweils nur über jeweils einen der Luftverteilerkanäle (7) mit Druckluft beaufschlagbar sind.

11. Plattenbearbeitungsanlage (2) mit einem Werkstückauflagetisch (1) nach einem der Ansprüche 1 bis 10.

12. Plattenbearbeitungsanlage (2) nach Anspruch 11, **dadurch gekennzeichnet, dass** die Plattenbearbeitungsanlage (2) zumindest eine, vorzugsweise entlang einer Sägelinie (20) verfahrbare, Säge (21) aufweist.

13. Plattenbearbeitungsanlage (2) nach Anspruch 11, **dadurch gekennzeichnet, dass** die Plattenbearbeitungsanlage (2) zumindest eine, entlang einer Sägelinie (20) verfahrbare, Säge (21) aufweist und der Luftverteilerkanal (7) in einer Richtung (22) weg von der, vorzugsweise orthogonal zur, Sägelinie (20) längserstreckt angeordnet ist.

14. Plattenbearbeitungsanlage (2) nach Anspruch 11 oder 13, **dadurch gekennzeichnet, dass** die Plattenbearbeitungsanlage (2) zumindest eine, entlang einer Sägelinie (20) verfahrbare, Säge (21) aufweist und die Segmente (6) in einer Abfolge hintereinander in einer Richtung (22) weg von der, vorzugsweise orthogonal zur, Sägelinie (20) angeordnet sind.

15. Verfahren zum Betrieb eines Werkstückauflagetisches (1) nach einem der Ansprüche 1 bis 10, **dadurch gekennzeichnet, dass** Druckluft von der Druckluftquelle (9) erzeugt und über den Lufteinspeisungsbereich (8) in den Luftverteilerkanal (7) eingespeist wird und, vorzugsweise nur, diejenigen Segmente (6) vom Luftverteilerkanal (7) aus mit Druckluft beaufschlagt werden, deren Luftzuführöffnungen (10) in dasjenige Teilvolumen (12, 13) münden, in dem sich dieser Lufteinspeisungsbereich (8) befindet.

## Claims

1. A workpiece support table (1), in particular for a panel machining installation (2), wherein the workpiece support table (1) has at least one workpiece support surface (3), in which a large number of air exit openings (4) are arranged to form at least one air cushion, and at least one air supply space (5) for supplying air to the air exit openings (4), wherein the air supply space (5) is divided into a plurality of segments (6), wherein compressed air can be supplied selectively through the segments (6) in each case to one of the air exit openings (4) or a group of the air exit openings (4), wherein the workpiece support table (1) additionally has at least one air distributor duct (7) with at least one air infeed region (8) which is connected or able to be connected to at least one compressed air source (9), wherein a plurality of the segments (6) in each case open with their air supply openings (10) into the air distributor duct (7), **characterised in that** at least one separating body (11) arranged movably in the air distributor duct (7) divides the air distributor duct (7) into at least two partial volumes (12, 13), wherein dependent on the respective position of the separating body (11) in the air distributor duct (7) in each case, preferably only, those segments (6) having air supply openings (10) which open into that partial volume (12, 13) in which the air infeed region (8) is located are or can be charged with compressed air from the compressed air source (9) and the separating body (11) is mounted displaceably, preferably linearly, in the air distributor duct (7).

2. A workpiece support table (1) according to Claim 1, **characterised in that** the separating body (11) separates the partial volumes (12, 13) from each other in sealing manner.

3. A workpiece support table (1) according to Claim 1 or 2, **characterised in that** it has a separating-body drive (14) with which the separating body (11) can be moved along the air distributor duct (7) and/or can be secured at the respective position independently of the application of pressure on at least one of the partial volumes (12, 13).

4. A workpiece support table (1) according to Claim 3, **characterised in that** the separating-body drive (14) has at least one traction cable (15) which is connected to the separating body (11) and is preferably guided in revolution and at least one motor (16) for exerting traction on the traction cable (15).

5. A workpiece support table (1) according to Claim 3 or 4, **characterised in that** the separating body (11) can be moved in opposing directions of movement (17, 18) in the air distributor duct (7) by means of the separating-body drive (14).

6. A workpiece support table (1) according to one of Claims 1 to 5, **characterised in that** in the case of two or more air infeed regions (8) in each case only those segments (6) having air supply openings (4) which open into that partial volume (12, 13) in which this air infeed region (8) is located are or can be charged with compressed air from the compressed air source (9) by means of one of the air infeed regions (8).

7. A workpiece support table (1) according to one of Claims 1 to 6, **characterised in that** the air supply openings (10) of the segments (6), viewed in at least one of the directions of movement (17, 18) of the separating body (11) in the air distributor duct (7), are arranged in a sequence one behind another.

8. A workpiece support table (1) according to one of Claims 1 to 7, **characterised in that** the air supply space (5) is divided into the segments (6) by means of separating elements (19), preferably partitions, and/or the segments (6) are designed as hoses.

9. A workpiece support table (1) according to one of Claims 1 to 8, **characterised in that** the workpiece support surface (3) is a coherent rigid surface and/or the segments (6) are arranged permanently in fixed manner in the workpiece support table (1).

10. A workpiece support table (1) according to one of Claims 1 to 9, **characterised in that** the workpiece support table (1) has two or more air distributor ducts (7) with separating bodies (11) arranged movably therein in each case, with individual segments (6) or groups of segments (6) being able to be charged with compressed air in each case only via one of the air distributor ducts (7) in each case.

11. A panel machining installation (2) having a workpiece support table (1) according to one of Claims 1 to 10.

12. A panel machining installation (2) according to Claim 11, **characterised in that** the panel machining installation (2) has at least one saw (21), which is preferably movable along a sawing line (20).

13. A panel machining installation (2) according to Claim 11, **characterised in that** the panel machining installation (2) has at least one saw (21), which is movable along a sawing line (20), and the air distributor duct (7) is arranged longitudinally extended in a direction (22) away from, preferably orthogonally to, the sawing line (20).

14. A panel machining installation (2) according to Claim 11 or 13, **characterised in that** the panel machining installation (2) has at least one saw (21), which is movable along a sawing line (20), and the segments (6) are arranged in a sequence one behind another in a direction (22) away from, preferably orthogonally to, the sawing line (20).

15. A method for operating a workpiece support table (1) according to one of Claims 1 to 10, **characterised in that** compressed air is produced by the compressed air source (9) and is fed into the air distributor duct (7) via the air infeed region (8), and, preferably only, those segments (6) having air supply openings (10) which open into that partial volume (12, 13) in which this air infeed region (8) is located are charged by compressed air from the air distributor duct (7).

## Revendications

1. Table de support de pièces (1), en particulier pour une installation d'usinage de panneaux (2), la table de support de pièces (1) présentant au moins une surface de support de pièces (3) dans laquelle sont disposés plusieurs orifices de sortie d'air (4) afin de former au moins un coussin d'air et au moins un espace d'acheminement de l'air (5) destiné à l'acheminement d'air vers les orifices de sortie d'air (4), l'espace d'acheminement de l'air (5) étant divisé en plusieurs segments (6), de l'air comprimé pouvant être acheminé de façon sélective à travers les segments (6) d'un des orifices de sortie d'air (4) ou d'un groupe d'orifices de sortie d'air (4), la table de support de pièces (1) présentant en plus au moins un canal de distribution d'air (7) comportant au moins une zone d'alimentation en air (8) reliée ou pouvant être reliée à au moins une source d'air comprimé (9), les orifices d'acheminement de l'air (10) de plusieurs des segments (6) débouchant dans le canal de distribution d'air (7), **caractérisée en ce qu'**au moins un corps de séparation (11), disposé de manière mobile dans le canal de distribution d'air (7), divise le canal de distribution d'air (7) en au moins deux parties de volume (12, 13), alors que, en fonction de la position respective du corps de séparation (11), respectivement, de préférence uniquement, les segments (6) sont ou peuvent être sollicités par l'air comprimé de la source d'air comprimé (9) dont les orifices d'acheminement de l'air (10) débouchent dans la partie de volume (12, 13) dans laquelle se trouve la zone d'alimentation en air (8) et le corps de séparation (11) est positionné de manière translatable, de préférence linéaire, dans la canal de distribution d'air (7).

2. Table de support de pièces (1) selon la revendication 1, **caractérisée en ce que** le corps de séparation (11) sépare les parties de volume (12, 13) l'une de l'autre de façon hermétique.

3. Table de support de pièces (1) selon la revendication 1 ou la revendication 2, **caractérisée en ce qu'**elle présente un entraînement de corps de séparation (14) avec lequel le corps de séparation (11) peut être déplacé le long du canal de distribution d'air (7) et/ou immobilisé sur la position respective indépendamment d'une sollicitation en pression d'au moins une des parties de volume (12, 13).

4. Table de support de pièces (1) selon la revendication 3, **caractérisée en ce que** l'entraînement de corps de séparation (14) présente au moins un câble de traction (15) relié au corps de séparation (11), de préférence périphérique, et au moins un moteur (16) pour tirer sur le câble de traction (15).

5. Table de support de pièces (1) selon la revendication 3 ou la revendication 4, **caractérisée en ce que** le corps de séparation (11) peut être déplacé, au moyen de l'entraînement de corps de séparation (14), dans le canal de distribution d'air (7) dans des sens de déplacement opposés l'un à l'autre.

6. Table de support de pièces (1) selon l'une quelconque des revendications 1 à 5, **caractérisée en ce que**, en présence d'au moins deux zones d'alimentation en air (8), seuls les segments (6) sont ou peuvent être sollicités par l'air comprimé de la source d'air comprimé (9) par l'une des zones d'alimentation en air (8), segments dont les orifices d'acheminement de l'air (4) débouchent dans la partie de volume (12, 13) dans laquelle se trouve cette zone d'alimentation en air (8) .

7. Table de support de pièces (1) selon l'une quelconque des revendications 1 à 6, **caractérisée en ce que** les orifices d'acheminement de l'air (10) des segments (6) sont disposés à la suite l'un derrière l'autre, vu dans au moins l'un des sens de déplacement (17, 18) du corps de séparation (11), dans le canal de distribution d'air (7).

8. Table de support de pièces (1) selon l'une quelconque des revendications 1 à 7, **caractérisée en ce que** l'espace d'acheminement d'air (5) est divisé en segments (6) au moyen d'éléments de séparation (19), de préférence des parois de séparation, et/ou les segments (6) sont configurés comme des tuyaux.

9. Table de support de pièces (1) selon l'une quelconque des revendications 1 à 8, **caractérisée en ce que** la surface de support de pièces (3) est une surface cohérente rigide et/ou les segments (6) sont disposés de manière permanente et stationnaire dans la table de support de pièces (1).

10. Table de support de pièces (1) selon l'une quelconque des revendications 1 à 9, **caractérisée en ce que** la table de support de pièce (1) comporte au moins deux canaux de distribution d'air (7) dotés chacun de corps de séparation (11) disposés à l'intérieur de manière mobile, certains segments (6) ou groupes de segments (6) ne pouvant être sollicités par l'air comprimé que, respectivement, par l'un des canaux de distribution d'air (7).

11. Installation d'usinage de panneaux (2) dotée d'une table de support de pièces (1) selon l'une quelconque des revendications 1 à 10.

12. Installation d'usinage de panneaux (2) selon la revendication 11, **caractérisée par** au moins une scie (21) déplaçable de préférence le long d'une ligne de sciage (20).

13. Installation d'usinage de panneaux (2) selon la revendication 11, **caractérisée en ce que** l'installation d'usinage de panneaux (2) comprend au moins une scie (21) déplaçable le long d'une ligne de sciage (20) et le canal de distribution d'air (7) est disposé en longueur dans un sens s'éloignant, de préférence de manière orthogonale, de la ligne de sciage (20).

14. Installation d'usinage de panneaux (2) selon la revendication 11 ou 13, **caractérisée en ce que** l'installation d'usinage de panneaux (2) comprend au moins une scie (21) déplaçable le long d'une ligne de sciage (20) et les segments (6) sont disposés à la suite l'un derrière l'autre dans un sens (22) s'éloignant, de préférence de manière orthogonale, de la ligne de sciage (20).

15. Procédé d'exploitation d'une table de support de pièces (1) selon l'une quelconque des revendications 1 à 10, **caractérisé en ce que** de l'air comprimé est généré par la source d'air comprimé (9) et introduit dans le canal de distribution d'air (7) via la zone d'alimentation en air (8) et, de préférence seuls, les segments (6) dont les orifices d'acheminement de l'air (10) débouchent dans la partie de volume (12, 13) dans laquelle se trouve cette zone d'alimentation d'air (8), sont sollicités en air comprimé à partir du canal de distribution d'air (7).
